# FASCICULE DE BREVET EUROPEEN

(11) **EP 0 688 695 B1**
(45) Date de publication et mention de la délivrance du brevet: **10.09.1997**
(21) Numéro de dépôt: 95470022.5
(22) Date de dépôt: 13.06.1995
(51) Int. Cl.: B60N 2/00, B60N 2/36, B60N 2/48

(54) **Système de verrouillage d'un élément mobile d'un siège de véhicule automobile**
Verriegelung eines beweglichen Bauteiles in einem Kraftfahrzeugsitz
Locking device for a movable member of a motor vehicle seat

(30) Priorité: 14.06.1994 FR 9407494
(43) Date de publication de la demande: 27.12.1995
(73) Titulaire: BERTRAND FAURE FRANCE, F-92100 Boulogne (FR)
(72) Inventeur: Pedronno, Philippe, F-57000 Metz (FR); Denis, Bernard, F-57000 Metz (FR)
(74) Mandataire: Schmit, Christian Norbert Marie

(56) Documents cités:
- EP-A- 0 375 636
- EP-A- 0 580 315
- WO-A-81/02549
- DE-A- 3 421 564
- US-A- 3 915 493
- US-A- 4 583 782

## Description

La présente invention concerne un système de verrouillage d'un élément mobile d'un siège de véhicule automobile sur un élément fixe tel que, par exemple, le verrouillage en position relevée d'un dossier de siège rabattable, sur un élément de carrosserie, ou encore le verrouillage d'un tel siège sur le plancher du véhicule, etc... (Voir par exemple DE-A-3 421 564, correspondant au préambule de la revendication indépendante).

De manière générale, de tels systèmes doivent assurer un verrouillage automatique lorsque l'élément mobile est amené dans la position où il doit être verrouillé, le déverrouillage étant effectué par un moyen de commande manuel tel qu'un poussoir.

Des systèmes de verrouillage connus comportent un crochet fixé sur un élément et un organe de verrouillage mobile à rappel élastique, monté sur l'autre élément pour coopérer avec le crochet. Par exemple, l'organe de verrouillage peut être un levier pivotant comportant une partie d'extrémité recourbée, biseautée de manière que le levier pivote lorsque cette partie d'extrémité entre en contact avec le crochet, et qui s'accroche ensuite sur le crochet par un pivotement de sens inverse, en étant rappelé par un ressort.

Le déverrouillage est assuré en agissant sur le levier, à l'encontre de l'effort du ressort, par un poussoir qui fait pivoter le levier pour dégager son extrémité du crochet. Le poussoir peut être d'une pièce avec le levier, ou être une pièce séparée. Dans d'autres systèmes, l'organe de verrouillage au lieu d'être pivotant, est mobile en translation, et également poussé par un ressort pour s'engager sur le crochet et assurer la solidarisation des deux éléments.

Certains de ces systèmes nécessitent un nombre de pièces élevé : levier, axe de pivotement, ressort, poussoir, etc, qui augmente leur coût et complique le montage. D'autres n'ont qu'une tenue aléatoire en cas de choc car alors l'extrémité du levier peut se trouver dégagée du crochet.

La présente invention a pour but de remédier à ces problèmes et vise en particulier à assurer un verrouillage fiable, résistant à des efforts importants, nécessitant un nombre de pièces minimal, et de montage aisé.

Avec ces objectifs en vue, l'invention a pour objet un système de verrouillage d'un élément mobile d'un siège sur un élément fixe, comportant les caractéristiques techniques décrites dans la revendication indépendante.

Grâce à l'invention, le nombre de pièces est réduit au maximum.

En effet, dans ce système, le fil constitue à la fois l'organe de verrouillage et le ressort de rappel, l'effort de rappel élastique résultant de l'élasticité propre du fil.

Par ailleurs, c'est le fil lui-même qui assure le verrouillage, et supporte les efforts que le crochet exerce sur lui si les deux éléments tendent à s'écarter. La partie mobile du fil étant en butée contre la paroi, de chaque côté de la fenêtre, les efforts que le crochet exerce sur celle-ci sont donc retransmis directement à la paroi et donc à l'élément de siège à verrouiller. Les contraintes que subit le fil dans la partie mobile sur laquelle s'aggripe le crochet sont essentiellement des contraintes de cisaillement, auxquelles le fil résiste très bien même s'il est de diamètre relativement faible. Ainsi, le système de verrouillage selon l'invention présente l'avantage, par rapport aux systèmes selon l'art antérieur, de transmettre directement à la structure les efforts tendant à écarter les deux éléments verrouillés, et de soumettre l'organe de verrouillage à des contraintes de cisaillement, contraintes auxquelles les matériaux couramment utilisés pour de tels organes résistent mieux qu'aux contraintes de traction ou flexion que subissent les organes de verrouillage selon l'art antérieur.

D'autre part, la fabrication de l'organe de verrouillage est peu coûteuse puisqu'il s'agit d'un simple fil, par exemple en acier, qu'il suffit éventuellement de plier de manière adéquate, et sa mise en place ne nécessite la manipulation que d'une seule pièce.

Selon une disposition préférentielle, le fil est conformé en forme d'anneau comportant deux extrémités orientées dans la même direction et désaxées, les axes des dites extrémités étant maintenus dans un plan commun fixe par rapport au dit support, et la partie mobile destinée à coopérer avec le crochet est une partie de l'anneau distante des dites extrémités, située en face de la dite fenêtre et s'étendant de part et d'autre de celle-ci.

Dans ce mode de réalisation, l'effort de rappel élastique résulte de la disposition relative particulière des extrémités de l'anneau, et du maintien de ces extrémités dans une position fixe sur le support. En effet, comme les deux extrémités du fil constituant l'anneau sont décalées latéralement, une rotation de celui-ci autour de la direction commune de ces extrémités provoque une déformation élastique globale de l'anneau (essentiellement une déformation de torsion du fil dans la zone de l'anneau éloignée de ses extrémités) . Lors d'une telle rotation, l'anneau reste cependant sensiblement plan, mais tend à revenir dans sa position initiale.

Selon une disposition particulière, l'anneau a une forme générale en rectangle, les deux dites extrémités étant orientées selon la direction d'un côté du dit rectangle constituant un axe de rotation de l'anneau.

Préférentiellement, les dites extrémités s'étendent dans le même sens, vers l'extérieur du dit rectangle, une extrémité étant dans le prolongement direct du côté du rectangle constituant l'axe de rotation, et l'autre extrémité étant un prolongement en retour à angle droit du côté adjacent.

Cette disposition facilite grandement la mise en place de l'anneau dans le système, les deux extrémités pouvant être placées simultanément dans leur logement sans déformation de l'anneau.

D'autres caractéristiques et avantages apparaîtront dans la description qui va être faite d'un système de verrouillage d'un dossier rabattable de siège arrière d'une automobile.

On se reportera aux dessins annexés dans lesquels :
- la figure 1 est une vue du système de verrouillage lorsque le dossier n'est pas verrouillé,
- la figure 2 est une vue similaire, lorsque le dossier est verrouillé,
- la figure 3 est une vue similaire lors du déverrouillage,
- les figures 4, 5 et 6 sont des représentations schématiques des différentes positions de l'anneau et du poussoir de déverrouillage, correspondant respectivement aux trois figures 1, 2 et 3.
- la figure 7 est une vue de détail de la fixation des extrémités de l'anneau.

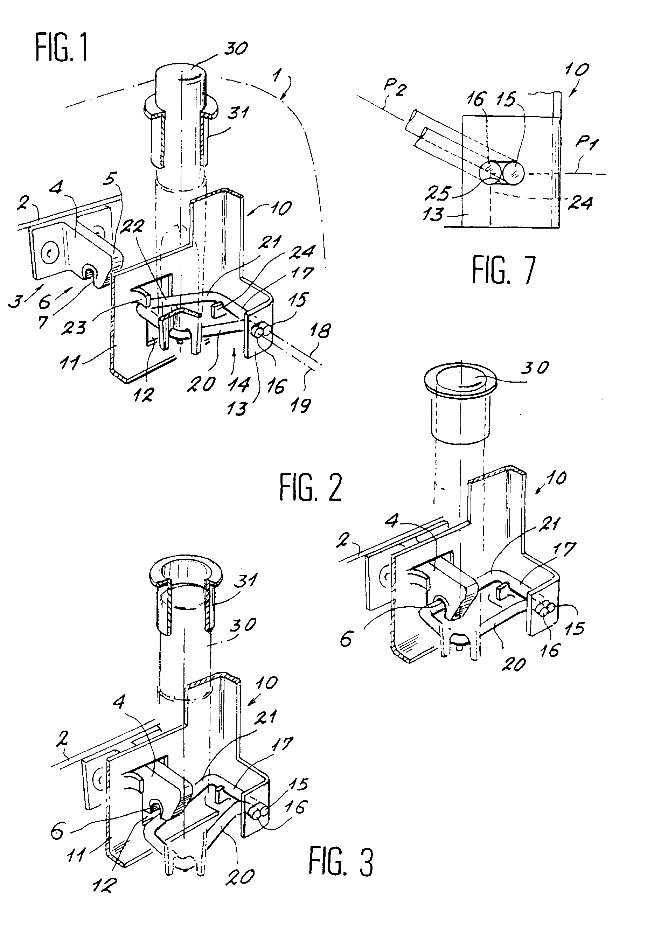

Sur le dessin de la figure 1, on a représenté l'angle supérieur gauche d'un dossier rabattable 1 de siège arrière, qui doit pouvoir être verrouillé en position relevée, sur un élément 2 de la carrosserie. Sur cet élément 2 est fixé un crochet 3 constitué d'une pièce de section en T dont la branche centrale 4 s'étend en direction du dossier et comporte une extrémité inclinée 5, destinée à permettre, comme on le verra par la suite, le verrouillage automatique du dossier en fin de relevage. La branche centrale 5 comporte également une encoche 6 dont la face avant 7 s'étend verticalement.

Le dossier 1 comporte dans son épaisseur un support 10 en tôle pliée, ce support pouvant être une partie intégrante de la structure du dossier. Le support 10 comprend une paroi 11 dans laquelle est découpée une fenêtre 12 à un emplacement situé en face du crochet 3, et dans laquelle la branche 4 peut s'insérer avec un jeu minimal. Le support 10 comprend également un retour 13 solidaire de la paroi 11 et parallèle à celle-ci, obtenu par pliage de la tôle constituant le support. Entre la paroi 12 et le retour 13 est placé un anneau 14 de forme générale rectangulaire, par exemple en fil d'acier ayant un diamètre de quelques millimètres. Cet anneau 14 est obtenu par un pliage du fil réalisé de manière que les extrémités 15, 16 soient parallèles, orientées dans la même direction vers l'extérieur du rectangle et pratiquement au contact l'une de l'autre. L'extrémité 15 est un prolongement direct d'un petit côté 17 du rectangle, dont l'axe 18 constitue un axe de rotation de l'anneau. L'extrémité 16 est un prolongement à angle droit d'un grand côté 20 du rectangle, situé vers le retour 13.

Les deux extrémités 15, 16 pénètrent simultanément dans un logement constitué d'un trou oblong 25 s'étendant horizontalement, réalisé dans le retour 13, où elles sont maintenues sans possibilité de se déplacer mais en pouvant toutefois pivoter sur elles-mêmes. Les axes 18, 19 des extrémités 15, 16 sont donc maintenus dans un plan fixe horizontal P1 (figure 7).

La distance entre la paroi 11 et le retour 13 est sensiblement égale à la largeur de l'anneau de sorte que celui-ci ne peut se déplacer horizontalement, et que son autre grand côté 21 soit en contact avec la paroi 11.

La longueur de ce grand côté 21 est telle qu'il passe devant la fenêtre 12, débordant de chaque côté de celle-ci et vient en butée en dessous d'une saillie 23 de la paroi 11, s'étendant vers l'anneau à partir du bord de la fenêtre 12, de manière à limiter la rotation de l'anneau vers le haut.

La partie du grand côté 21 de l'anneau située juste en face de la fenêtre 12, forme une partie d'accrochage 22, perpendiculaire à la direction 18, 19 des extrémités, et qui s'engage dans l'encoche 6 du crochet 3, en position verrouillée (voir figure 2).

Pour maintenir le petit côté de l'anneau, le support 10 comporte une patte 24, obtenue par pliage de la tôle, vers l'intérieur, en-dessous du dit petit côté.

Le système comporte également un poussoir 30 de déverrouillage, mobile verticalement, guidé dans une bague 31 fixée sur la face supérieur du dossier 1.

Le poussoir est lié à l'anneau, par exemple par encliquetage sur celui-ci, à distance des extrémités 15, 16 et de manière à faire pivoter l'anneau vers le bas par un appui sur le poussoir.

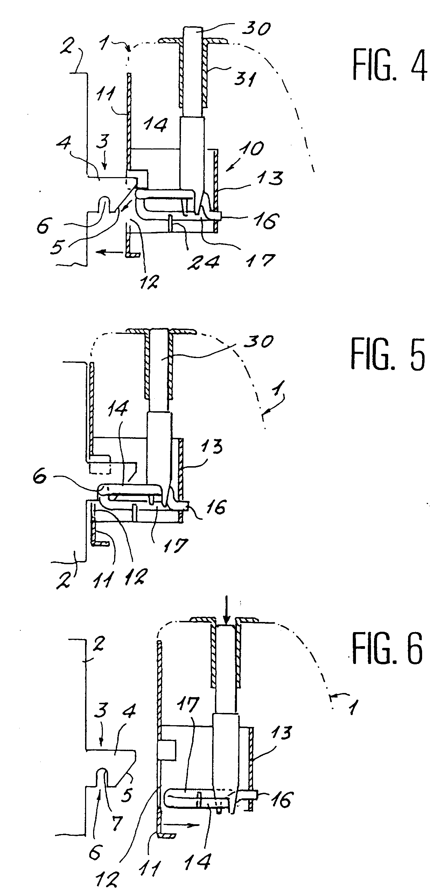

Dans l'exemple représenté, l'anneau 14 est conformé de manière que, laissé libre de toute contrainte, le plan général P2 de l'anneau est transversal au plan P1 des axes 18 et 19 des extrémités 15, 16. L'inclinaison relative de ces deux plans est déterminée de manière que, lorsque le crochet 3 n'est pas inséré dans la fenêtre 12 (figure 1 et 4), l'anneau soit en butée sous la saillie 23, en subissant une légère contrainte qui garantit son maintien en position.

Dans cette position, le poussoir 30 dépasse nettement au-dessus de la bague 31.

Lorsque le dossier est approché du crochet 3, la partie inclinée 5 de celui-ci vient en contact avec la partie d'accrochage 22 de l'anneau et la repousse vers le bas en faisant pivoter l'anneau (figure 4). Lorsque l'encoche 6 arrive à l'aplomb de la partie d'accrochage 22, l'élasticité de l'anneau provoque son pivotement en sens contraire, et assure le verrouillage par engagement de la dite partie d'accrochage 22 dans l'encoche 6 (figures 2 et 5).

Les dimensions du crochet et en particulier la profondeur de l'encoche, sont telles que, dans cette position, l'anneau est décalé angulairement par rapport à sa position de repos précédente (crochet non engagé), et se trouve proche de l'horizontale. De ce fait, le poussoir, qui est lié à l'anneau, est plus bas que dans la position de repos. Préférentiellement, les dimensions des différentes pièces, notamment la longueur du poussoir, sont déterminées de manière que, dans cette position verrouillée, l'extrémité supérieure du poussoir 30 affleure le bord supérieur de la bague 31.

Ainsi, le poussoir constitue également un indicateur visuel de l'état de verrouillage du dossier : si le dossier est correctement verrouillé, le poussoir n'est pratiquement pas visible ; si le dossier n'est pas correctement verrouillé, le poussoir dépasse largement et est bien visible.

Pour déverrouiller, il suffit d'appuyer avec le doigt sur le poussoir, ce qui provoque un pivotement de l'anneau vers le bas, le dégagement de la partie d'accrochage 22 hors de l'encoche 6 du crochet (figure 3), et autorise la sortie du crochet hors de la fenêtre 12 et le rabattement du dossier.

L'invention n'est pas limitée au système de verrouillage qui vient d'être décrit uniquement à titre d'exemple. En particulier, la forme générale de l'anneau peut être différente d'un rectangle. Les extrémités de l'anneau peuvent être, par rapport à son plan général, soit contenues dans ce plan, soit dans un plan perpendiculaire, ou faisant un angle quelconque avec le dit plan général, l'orientation du trou oblong maintenant les extrémités 15, 16 étant alors adaptée en conséquence.

En fonction des caractéristiques mécaniques du fil, des dimensions générales de l'anneau et de la raideur souhaitée pour celui-ci, on pourra également modifier l'écartement des extrémités.

Dans le cas où une visualisation du verrouillage n'est pas nécessaire, la position de l'anneau, lorsque le crochet est verrouillé peut être la même que lorsque le crochet n'est pas inséré. Le poussoir du déverrouillage peut être modifié, ou remplacé par tout autre moyen, par exemple un levier, permettant d'agir sur l'anneau pour le faire pivoter.

## Revendications

1. Système de verrouillage d'un élément mobile d'un siège sur un élément fixe, comportant un organe de verrouillage mobile à rappel élastique constitué d'un fil en matériau résistant au cisaillement, monté sur un premier (1) des dits éléments et destiné à coopérer avec un crochet (3) fixe, lié au deuxième élément (2), le dit premier élément (1) comportant un support (10) comprenant une paroi fixe (11) pourvue d'une fenêtre (12) dans laquelle le dit crochet pénètre selon une direction d'insertion sensiblement perpendiculaire à la dite paroi, et le dit fil comportant une partie mobile (21) qui s'étend contre la dite paroi en travers de la fenêtre et une autre partie (15, 16, 26) fixée sur le support (10), la partie mobile pouvant être déplacée parallèlement à la paroi en déformant élastiquement le fil, de manière à pouvoir coopérer avec le crochet pour empêcher son retrait lorsque celui-ci est inséré dans la fenêtre,
caractérisé en ce que le fil est conformé en un anneau (14) dont une partie (22) constitue la dite partie mobile et qui comporte deux extrémités (15, 16) distantes de la dite partie mobile, orientées dans une même direction axiale perpendiculaire à la paroi (11) et autour de laquelle l'anneau peut pivoter, les dites extrémités étant désaxées l'une par rapport à l'autre et les axes (18, 19) des dites extrémités étant maintenus dans un plan commun (P1) fixe par rapport au dit support.

2. Système de verrouillage selon la revendication 1, caractérisé en ce que l'anneau (14) a une forme générale en rectangle, les deux dites extrémités (15, 16) étant orientées selon la direction d'un côté (17) du dit rectangle constituant un axe de rotation de l'anneau, et s'étendant vers l'extérieur du dit rectangle.

3. Système de verrouillage selon l'une des revendications 1 ou 2, caractérisée en ce que l'anneau s'étend dans un plan général (P2) transversal au dit plan fixe (P1).

4. Système de verrouillage selon l'une des revendications 1 à 3, caractérisée en ce que les extrémités (15, 16) de l'anneau sont maintenues dans un logement (25) ménagé dans un retour (13) solidaire de la dite paroi (11) et parallèle à celle-ci.

5. Système de verrouillage selon la revendication 4, caractérisé en ce que l'anneau (14) est logé entre la dite paroi (11) et le dit retour (13) et la distance entre le retour et la paroi est sensiblement égal à la dimension de l'anneau, dans la direction des dites extrémités.

6. Système de verrouillage selon l'une des revendications 1 à 5, caractérisé en ce qu'il comporte une patte (24) solidaire du support (10) et servant d'appui au côté (17) de l'anneau constituant son axe de rotation.

7. Système de verrouillage selon l'une des revendication 1 à 6, caractérisé en ce qu'il comporte un poussoir (30) de déverrouillage lié à l'anneau (14) à distance de ses extrémités, et mobile sensiblement perpendiculairement au plan de l'anneau.

8. Système de verrouillage selon la revendication 7, caractérisé en ce que le poussoir (30) est guidé dans une bague (31) et l'extrémité supérieure du poussoir affleure le bord supérieur de la bague, en position de verrouillage, et dépasse au-dessus de la bague lorsque le crochet n'est pas engagé dans le système de verrouillage.

## Claims

1. System for locking a movable component of a seat on a fixed component, including an elastic-return movable locking member consisting of a wire made from material resistant to shearing, mounted on a first one (1) of the said components and designed to cooperate with a fixed hook (3), connected to the second component (2), the said first component (1) having a support (10) comprising a fixed wall (11) provided with an aperture (12) in which the said hook enters in an insertion direction substantially perpendicular to the said wall, and the said wire having a movable part (21) which extends against the said wall through the aperture and another part (15, 16, 26) fixed to the support (10), the movable part being able to be moved parallel to the wall whilst elastically deforming the wire, so as to be able to cooperate with the hook in order to prevents its withdrawal when the latter is inserted in the aperture,
characterised in that the wire is shaped as a ring (14), a part (22) of which constitutes the said movable part and which has two ends (15, 16) distant from the said movable part, oriented in the same axial direction perpendicular to the wall (11) and about which the ring is able to pivot, the said ends being offset with respect to each other and the axes (18, 19) of the said ends being maintained in a common plane (P1) fixed with respect to the said support.

2. Locking system according to Claim 1, characterised in that the ring (14) has an overall rectangular shape, the two said ends (15, 16) being oriented in the direction of a side (17) of the said rectangle constituting a rotation axis of the ring, and extending towards the outside of the said rectangle.

3. Locking system according to one of Claims 1 or 2, characterised in that the ring extends in an overall plane (P2) transverse to the said fixed plane (P1).

4. Locking system according to one of Claims 1 to 3, characterised in that the ends (15, 16) of the ring are held in a housing (25) provided in a return (13) integral with the said wall (11) and parallel thereto.

5. Locking system according to Claim 4, characterised in that the ring (14) is housed between the said wall (11) and the said return (13) and the distance between the return and the wall is substantially equal to the dimension of the ring, in the direction of the said ends.

6. Locking system according to one of Claims 1 to 5, characterised in that it has a tab (24) integral with the support (10) and serving as a support for the side (17) of the ring constituting its rotation axis.

7. Locking system according to one of Claims 1 to 6, characterised in that it includes a locking pushbutton (30) connected to the ring (14) at a distance from its ends, and movable substantially perpendicularly to the plane of the ring.

8. Locking system according to Claim 7, characterised in that the pushbutton (30) is guided in a collar (31) and the top end of the pushbutton is flush with the top edge of the collar, in the locking position, and projects beyond the collar when the hook is not engaged in the locking system.

## Patentansprüche

1. System zur Verriegelung eines beweglichen Elements eines Sitzes an einem festen Element, mit einem beweglichen Verriegelungsorgan mit elastischer Rückstellung, das aus einem Draht aus scherbeständigem Material gebildet ist, an einem ersten (1) der Elemente montiert ist und vorgesehen ist, um mit einem mit dem zweiten Element (2) verbundenen festen Haken (3) zusammenzuwirken, wobei das erste Element (1) einen Träger (10) aufweist, der eine feste Wand (11) mit einem Fenster (12) aufweist, in das der Haken in einer im wesentlichen zur Wand senkrechten Einführrichtung eingreift, und der Draht einen beweglichen Bereich (21), der sich an der Wand und quer über das Fenster erstreckt, und einen anderen am Träger (10) befestigten Bereich (15, 16, 26) umfaßt, wobei der bewegliche Bereich parallel zur Wand unter elastischer Verformung des Drahts bewegt werden kann, so daß er mit dem Haken zusammenwirken kann, um dessen Zurückweichen zu verhindern, wenn dieser in das Fenster eingeführt ist,
**dadurch gekennzeichnet, daß**
der Draht als Ring (14) geformt ist, von dem ein Bereich (22) den beweglichen Bereich bildet und der zwei vom beweglichen Bereich beabstandete Enden (15, 16) umfaßt, die in derselben axialen Richtung senkrecht zur Wand (11) orientiert sind, und um die der Ring schwenken kann, wobei die Enden gegeneinander achsenverschoben sind und die Achsen (18, 19) der Enden in einer in Bezug auf den Träger festen gemeinsamen Ebene (P1) gehalten sind.

2. Verriegelungssystem nach Anspruch 1, dadurch gekennzeichnet, daß der Ring (14) eine allgemein rechteckige Form hat, wobei die zwei Enden (15, 16) in der Richtung einer Seite (17) des Rechtecks orientiert sind, die eine Drehachse des Rings bildet und sich vom Rechteck nach außen erstrecken.

3. Verriegelungssystem nach einem der Ansprüche 1 oder 2, dadurch gekennzeichnet, daß der Ring sich in einer quer zur festen Ebene (P1) liegenden allgemeinen Ebene (P2) erstreckt.

4. Verriegelungssystem nach einem der Ansprüche 1 bis 3, dadurch gekennzeichnet, daß die Enden (15, 16) des Rings in einer Aussparung (25) gehalten sind, die in einer mit der Wand (11) fest verbundenen und zu dieser parallelen Rückführung (13) gebildet ist.

5. Verriegelungssystem nach Anspruch 4, dadurch gekennzeichnet, daß der Ring (14) zwischen der Wand (11) und der Rückführung (13) untergebracht ist und der Abstand zwischen der Rückführung und der Wand im wesentlichen gleich der Ausdehnung des Rings in Richtung der Enden ist.

6. Verriegelungssystem nach einem der Ansprüche 1 bis 5, dadurch gekennzeichnet, daß es einen mit dem Träger (10) fest verbundenen Fuß (24) umfaßt, der als Anschlag für die Seite (17) des Rings dient, die dessen Drehachse bildet.

7. Verriegelungssystem nach einem der Ansprüche 1 bis 6, dadurch gekennzeichnet, daß es einen Entriegelungsschieber umfaßt, der mit dem Ring (14) in einem Abstand von dessen Enden verbunden und im wesentlichen senkrecht zur Ebene des Rings bewegbar ist.

8. Verriegelungssystem nach Anspruch 7, dadurch gekennzeichnet, daß der Schieber (30) in einem Reif (31) geführt ist und das obere Ende des Schiebers in Verriegelungsposition mit dem oberen Rand des Reifs bündig ist und über den Ring übersteht, wenn der Haken nicht in das Verriegelungssystem eingreift.
